# EUROPÄISCHE PATENTSCHRIFT

(11) **EP 1 335 944 B1**
(45) Veröffentlichungstag und Bekanntmachung des Hinweises auf die Patenterteilung: **23.07.2008**
(21) Anmeldenummer: 01986703.5
(22) Anmeldetag: 11.10.2001
(51) Int. Cl.: C08G 18/16, C08G 18/20, B01J 35/08, B01J 37/02

(54) **KATALYSATORSYSTEME, ENTHALTEND IN WACHS EINGEKAPSELTE KATALYSATOREN**
CATALYST SYSTEM, CONTAINING CATALYSTS ENCAPSULATED IN WAX
SYSTEMES CATALYSEURS CONTENANT DES CATALYSEURS ENCAPSULES DANS LA CIRE

(30) Priorität: 12.10.2000 DE 10050417
(43) Veröffentlichungstag der Anmeldung: 20.08.2003
(73) Patentinhaber: BASF SE, 67056 Ludwigshafen (DE)
(72) Erfinder: KREYENSCHMIDT, Martin, 49393 Lohne (DE); JAHNS, Ekkehard, 69469 Weinheim (DE)
(86) Internationale Anmeldenummer: PCT/EP2001/011762
(87) Internationale Veröffentlichungsnummer: WO 2002/031013

(56) Entgegenhaltungen:
- GB-A- 1 035 903
- GB-A- 1 053 500
- US-A- 3 455 848
- US-A- 3 790 515

## Beschreibung

Die Erfindung betrifft Katalysatorsysteme mit mindestens einem Katalysator c), der eine Reaktion von Polyisocyanaten a) mit Verbindung b) mit mindestens zwei gegenüber Isocyanatgruppen reaktiven Wasserstoffatomen katalysiert und in Wachs eingekapselt ist, sowie ein Verfahren zu deren Herstellung. Ferner betrifft die Erfindung die Verwendung des Katalysatorsystems zur Herstellung von Polyisocyanat-Polyadditionsprodukten, insbesondere von elastischen, zellförmigen und kompakten Polyurethanen, sowie ein Verfahren zur deren Herstellung.

Die Umsetzung von Polyisocyanaten zu Polyisocyanat-Polyadditionsprodukten, insbesondere zu Polyurethanen, wird im allgemeinen in Gegenwart von Katalysatoren durchgeführt. Das Reaktionsprofil eines Polyurethansystems wird dabei maßgeblich durch die Art und Menge der eingesetzten Katalysatoren gesteuert. Die Art und Menge der verwendeten Katalysatoren bestimmt einerseits den Reaktionsbeginn nach Vermischen der Isocyanat- und Polyolkomponenten und steuert andererseits die Entformzeiten des herzustellenden Formteils. Die Entformzeit beschreibt den Zeitraum, nachdem ein Werkteil aus der Form entnommen werden kann, ohne das es bei diesem Vorgang zu Beschädigungen kommt. Die Entformzeit ist massgeblich bestimmt durch die Menge der eingesetzten Katalysatoren und sollte aus wirtschaftlichen Gründen möglichst kurz sein.

Die Menge der in einem PUR-System eingesetzten Katalysatoren kann jedoch nicht beliebig erhöht werden, da die Katalyse auch die Startzeiten der Systeme signifikant beeinflusst. Ab einer bestimmten Katalysatorkonzentration, die von System und maschinentechnischer Verarbeitungsart vorgegeben wird, kann die Katalysatormenge nicht mehr gesteigert werden, da ansonsten das System bereits beim Vermischen der Komponenten reagiert. In diesen Fällen ist eine Verarbeitung nicht mehr möglich.

Zur Erzielung von kurzen Entformzeiten sind im Stand der Technik säureblockierte tertiäre Amine bekannt. Durch die Umsetzung eines tertiären Aminkatalysators mit einer Säure, entsteht ein Ammoniumsalz, das katalytisch inaktiv ist. Im reagierenden PUR-System werden durch die entstehende Reaktionswärme die Gleichgewichte zwischen Salz und freiem Amin bzw. Säure auf die Seite der freien Amine verschoben und der Katalysator aktiviert. Der deutliche Nachteil dieser Systeme liegt darin begründet, dass gewöhnlich in den PUR-Systemen Kombinationen von Amin-Katalysatoren vorliegen und bei der Verwendung nur eines blockierten Katalysators es zur Ausbildung unterschiedlicher Säure-Base-Gleichgewichte zwischen den Katalysatoren kommt. Durch die Veränderung dieser Gleichgewichte wird das Reaktionsprofil des gesamten Systems beeinflusst und eine gleichbleibende Verarbeitungsfähigkeit kann nicht garantiert werden. Darüber hinaus liegen die Dissoziationstemperaturen oftmals so hoch, das der Katalysator nur in begrenztem Umfang freigesetzt wird. Weiterhin können mit dieser Technologie keine hochwirksamen metallorganischen Katalysatoren blockiert werden. Ferner führt die im System partiell freigesetzte Säure zu Korrosionserscheinungen an der Verarbeitungsmaschine.

GB1035903 beschreibt ein Verfahren zur Herstellung von Polyurethan-Schaumstotten enthaltend einen Katalysator für die Reaktion zwischen lsocyanat und Glykol, wobei der Katalysator in Mikrokapseln aus einem schmelzbaren Material eingekapselt ist.

Der Erfindung lag nun die Aufgabe zugrunde, ein Katalysatorsystem zur Herstellung von Polyisocyanat-Polyadditionsprodukten, insbesondere von Polyurethanen, bereitzustellen, das die Startzeiten der Systeme wenig beeinflusst, jedoch das Aushärteverhalten der Materialien beschleunigt und somit die Entformzeiten und ähnliche Parameter, wie beispielsweise die Knickzeiten bei Integralschäumen, deutlich reduziert.

Eine weitere Aufgabe der Erfindung war es, ein Katalysatorsystem bereitzustellen, dass vorstehend erwähnte Vorteile aufweist und metallorganische Katalysatoren umfasst.

Die Aufgabe konnte dadurch gelöst werden, dass ein zur Herstellung von Polyisocyanat-Polyadditionsprodukten geeigneter c) Katalysator in Wachs eingekapselt wird.

Gegenstand der vorliegenden Erfindung ist daher ein Katalysatorsystem, das mindestens einen Katalysator c) enthält, der eine Reaktion von Polyisocyanaten a) mit Verbindungen mit mindestens zwei gegenüber Isocyanatgruppen reaktiven Wasserstoffatomen b) katalysiert und in Wachs eingekapselt ist.

Ein weiterer Gegenstand der Erfindung ist ein Verfahren zur Herstellung des erfindungsgemäßen Katalysatorsystems.

Ebenfalls ist Gegenstand der Erfindung die Verwendung des erfindungsgemäßen Katalysatorsystems zur Herstellung von Polyisocyanat-Polyadditionsprodukten, insbesondere von Polyurethanen.

Schließlich ist Gegenstand der Erfindung ein Verfahren zur Herstellung von Polyisocyanat-Polyadditionsprodukten, erhältlich durch Umsetzung von
a) Polyisocyanaten mit
b) höhermolekularen Verbindung mit mindestens zwei gegenüber Isocyanatgruppen reaktiven Wasserstoffatomen, in Gegenwart von
c) Katalysatoren und gegebenenfalls
d) Treibmitteln,
e) Kettenverlängerungsmitteln und
f) Hilfs- oder Zusatzstoffen,
dadurch gekennzeichnet, dass ein Teil oder die gesamte Menge des Katalysators c) in Wachs eingekapselt ist.

Unter Wachs werden im Rahmen dieser Erfindungen Verbindungen verstanden, deren Schmelzpunkt im allgemeinen zwischen 20 und 150°C, bevorzugt zwischen 30 und 130°C und besonders bevorzugt zwischen 40 und 120°C liegt. Ferner sind die Wachse der vorliegenden Erfindung im festen Zustand im allgemeinen knetbar oder fest bis brüchig hart, aber nicht glasartig. Im allgemeinen sind die Wachse der vorliegenden Erfindung schon wenig oberhalb des Schmelzpunktes verhältnismäßig niedrigviskos und bevorzugt nicht fadenziehend.

Der Begriff Wachse umfasst natürliche Wachse, chemisch modifizierte Wachse und synthetische Wachse. Natürliche Wachse umfassen pflanzliche Wachse wie beispielsweise Montanwachs, tierische Wachse wie beispielsweise Bienenwachs, Mineralwachse und petrochemische Wachse wie beispielsweise Petrolatum, Paraffinwachs und Mikrowachs. Chemisch modifizierte Wachse umfassen beispielsweise Hartwachse wie Montanesterwachse. Synthetische Wachse umfassen unter anderem Alkanwachse, wie beispielsweise Wachsalkohole, insbesondere höhermolekulare wasserunlösliche Fettalkohole mit bevorzugt mehr als 12 Kohlenstoffatomen, wie beispielsweise Lignocerylalkohol, Cerylalkohol, Myricylalkohol, Melissylalkohol und Polyalkylenoxide wie beispielsweise Polyethylenoxid, Poly-THF, Polyvinyletherwachse, Polyolefinwachse und oxidierte Polyolefinwachse. Ferner umfaßt der Begriff Wachse höhermolekulare Fettsäuren, bevorzugt mit mindestens 9 Kohlenstoffatomen, wie beispielsweise Behensäure, Tetracosansäure und Cerotinsäure, die gegebenenfalls mit Alkoholen verestert werden können und hochmolekulare Polyester mit einem Molekulargewicht von > 1000 g/mol, bevorzugt > 1500 g/mol, die durch Umsetzung von Di- oder Polycarbonsäuren mit 2 bis 20 Kohlenstoffatomen mit Di- oder Polyalkoholen mit 2 bis 30 Kohlenstoffatomen erhältlich sind, wobei die entsprechenden Säuren bzw. Alkohole aliphatische und/oder aromatische Struktureinheiten enthalten können. Ebenfalls können Gemische der vorstehend genannten Wachse eingesetzt werden.

In einer bevorzugten Ausführungsform werden n-Paraffinwachse mit einem Schmelzpunkt von 50 bis 100°C, bevorzugt von 60 bis 80°C, verwendet. Die eingesetzten n-Paraffinwachse weisen bevorzugt eine Schmelzwärme von 50 bis 250 Joule/Gramm, besonders bevorzugt von 120 bis 190 Joule/Gramm, auf.

Der Begriff Polyisocyanat-Polyadditionsprodukte umfasst Additionsprodukte, die im allgemeinen Urethan- Allophanat-, Harnstoff-, Biuret-, Uretdion-, Amid-, Isocyanurat-, Carbodiimid- und/oder Uretonimingruppen enthalten. Bevorzugt sind Urethan und Harnstoffgruppen.

Die erfindungsgemäßen Polyisocyanat-Polyadditionsprodukte können kompakt oder zellförmig sein. In einer bevorzugten Ausführungsform handelt es sich bei den Polyisocyanat-Polyadditionsprodukten um Weich-, Hart-, Halbhart- oder Integralschäume aus Polyurethanbasis oder um kompakte, bevorzugt thermoplastische Polyurethane und/oder Gießelastomere.

Das erfindungsgemäße Katalysatorsystem enthält einen Katalysator c), der eine Reaktion von Polyisocyanaten a) mit Verbindungen mit mindestens zwei gegenüber Isocyanatgruppen reaktiven Wasserstoffatomen b) katalysiert oder Gemische davon, umfassend mindestens zwei verschiedene Katalysatoren. Bevorzugt werden Katalysatoren, die eine Umsetzung von Isocyanat mit einer OH-funktionellen Gruppe zu einer Urethanbindung katalysieren, sogenannte Vernetzungskatalysatoren, und Katalysatoren, die insbesondere die Umsetzung von Wasser mit Isocyanat zur Carbarminsäure unterstützen, sogenannte Treibkatalysatoren, verwendet. Weiterhin ist ein Gemisch aus Vernetzungskatalysatoren und Treibkatalysatoren bevorzugt.

In Betracht kommen beispielsweise organische Amine, wie Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-l,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)-ethylendiamin, Tris-(N,N-dimethylaminopropyl)-s-hexahydrotriazin, 1,4-Diazabicyclo-[2,2,2]-octan, 4-Chlor-2,5-dimethyl-1-(N-methylaminoethyl)-imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol, Tris(dimethylaminomethyl)phenol, N,N-Dimethylaminoethyl-morpholin, N,N,N',N'-Tetramethyl-1-butanediamin, 1,8-Diazabicyclo5,4,0-undecan, 1,4-Ethylenpiperidin, N,N-Dimorpholinodiethylether, N,N-dimethyl-N',N'-2-hydroxypropyl-1,3-propylen-diamin, N-Butylmorpholin, N;N;N'-trimethyl-N'hydroxyethyl-bis(aminoethyl)ether, N,N-Bis(3-dimethylaminopropyl)amino-2-propanol und N-Methyl-N'-(2-dimethylamino)ezhyl-piperazin oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinndiacetat. Ferner können auch Kaliumsalze von Carbonsäuren, wie beispielsweise Kaliumacetat, und Metallkatalysatoren, umfassend Bismut- Eisen- oder Zirkonverbindungen, wie z.B. Eisenacetylacetonat, verwendet werden.

Bevorzugt können tertiäre aliphatische und/oder cycloaliphatische Amine in den Mischungen in den Mischungen enthalten sein, besonders bevorzugt Triethylendiamin.

Weiterhin können bevorzugt als Katalysator auch Gemische verwendet werden, die sowohl Katalysatoren auf Aminbasis als auch Katalysatoren auf Basis von organischen Metallverbindungen enthalten.

Bei den genannten Katalysatoren handelt es sich in der Regel um Feststoffe. Es können jedoch auch flüssige Katalysatoren, bevorzugt vom Amintyp, durch die erfindungsgemäßen Verfahren, bevorzugt durch Sprühkühlung, in eine feste Form gebracht werden. Bei Verwendung von flüssigen Katalysatoren ist die Verwendung der vorstehend genannten n-Paraffinwachse mit einem Schmelzpunkt von 50 bis 100°C besonders vorteilhaft.

Zur Herstellung der erfindungsgemäßen Katalysatorsysteme werden im allgemeinen die Katalysatoren c) in erwärmten, flüssigem Wachs gelöst oder suspendiert. Gegebenenfalls kann ein Lösungsvermittler zugesetzt werden, der eine bessere Lösung des Katalysators in dem Wachs ergibt. Das Gemisch aus flüssigem Wachs und Katalysator wird nun bevorzugt in einer polaren Flüssigkeit abgekühlt und dispergiert. Gegebenenfalls kann vor diesem Schritt der Schmelze ein Dispergiermittel zugegeben werden, das zu einer vorteilhaften Dispergierung führt. In einer bevorzugten Ausführungsform erfolgt die Dispergierung derart, dass das erfindungsgemäße Katalysatorsystem teilchenförmig vorliegt, umfassend Teilchen mit einem mittleren Teilchendurchmesser von 0,5 bis 500 µm, bevorzugt von 1 bis 100 µm, mehr bevorzugt von 2 bis 50 µm.

Als polare Flüssigkeit ist im allgemeinen jede Flüssigkeit geeignet, in der das Wachs unlöslich ist. Bevorzugt verwendet wird Wasser oder b) eine Verbindung mit mindestens zwei gegenüber Isocyanatgruppen reaktiven Wasserstoffatomen. Bevorzugt wird dabei als Komponente ein Polyol, insbesondere ein Polyetherol, verwendet, besonders bevorzugt wird das Polyol verwendet, das bei einer Herstellung von Polyisocyanat-Polyadditionsprodukten eingesetzt wird. Die Verwendung dieses Polyols ist vorteilhaft, da dadurch kein Fremdstoff in das System eingebracht wird und bei zelligen Produkten eine mögliche Destabilisierung des Schaums durch Fremdstoffe vermieden werden kann.

Als Lösungsvermittler können im allgemeinen Verbindungen eingesetzt werden, die z.B. Wasserstoffbrückenbindungen zu den Katalysatoren c) aufbauen können und dadurch die Löslichkeit verbessern können. In Betracht kommen beispielsweise polare Polymere, wie z.B. Polyethylenoxid oder Polypropylenoxid oder Mischpolyether aus Ethylenoxid und Propylenoxid. Der Lösungsvermittler wird üblicherweise in einer Menge von 0,1 bis 10 Gew.-%, bevorzugt 0,5 bis 5 Gew.-%, bezogen auf das Gewicht von Wachs und Katalysator c), eingesetzt.

Als Dispergiermittel sind im allgemeinen amphiphile Moleküle geeignet, die einen hydrophoben, mit dem Wachs verträglichen Teil haben, und einen hydrophilen, mit der polaren Flüssigkeit verträglichen Teil haben. Beispielsweise kann Stearinsäure dazu verwendet werden. Das Dispergiermittel wird üblicherweise in einer Menge von 0,1 bis 20 Gew.-%, bevorzugt 1 bis 10 Gew.-%, bezogen auf das Gewicht von Wachs und Katalysator c), eingesetzt.

In einer weiteren Ausführungsform zur Herstellung der erfindungsgemäßen Katalysatorsysteme kann das flüssige Gemisch aus Katalysator c) und erwärmten Wachs direkt durch versprühen in einem Gasstrom, bevorzugt einem kalten Gasstrom, in eine geeignete, partikuläre Form gebracht werden, so dass ein, bevorzugt körniges, Pulver erhalten wird. Als Gas sind alle gasförmigen Stoffe geeignet, die nicht mit dem Katalysator reagieren. Bevorzugt sind Stickstoff und Luft. Verfahrenstechnisch ist ein Apparat ähnlich einem Sprühtrockner geeignet, der mit einem kalten Gasstrom betrieben wird. Weiterhin kann das in der polaren Flüssigkeit dispergierte Katalysatorsystem auch gefriergetrocknet werden. Dabei wird die Katalysatordispersion zunächst eingefroren und im Vakuum das Dispergiermittel entfernt. Man erhält ein trockenen Pulver. Beide Verfahren führen bevorzugt zu Pulvern, umfassend Teilchen mit einem mittleren Teilchendurchmesser von 0,5 bis 500 µm, bevorzugt von 1 bis 100 µm, mehr bevorzugt von 2 bis 50 µm.

Die erfindungsgemäßen Katalysatorsysteme können vorteilhaft zur Herstellung von Polyisocyanat-Polyadditionsprodukten, insbesondere von Polyurethanen, verwendet werden. Die erfindungsgemäßen Katalysatorsysteme ermöglichen es, das Reaktionsprofil beispielsweise eines PUR-Systems maßgeschneidert einzustellen. Die im Wachs eingebetteten Katalysatoren c) beeinflussen die Startzeiten des Systems nahezu nicht. Im Laufe der Reaktion wird jedoch Wärme frei, das Wachs schmilzt ab einer definierten Temperatur und setzt den Katalysator frei. Je nach Schmelzpunkt des eingesetzten Wachses kann die Freisetzung des Katalysators zu einem unterschiedlichen Zeitpunkt auf der Reaktionskoordinate erreicht werden. Die erhöhte Katalysatorkonzentration führt im allgemeinen zu deutlich kürzeren Entformzeiten.

Das erfindungsgemäße Katalysatorsystem kann zu 100 % aus in Wachs eingekapselten Katalysator bestehen. Aber auch geringere Mengen können die vorstehend genannten Effekte bereits zeigen, d.h. das Katalysatorsystem kann neben in Wachs eingekapselten Katalyator c) auch noch weiteren, nicht in Wachs eingekapselten Katalysator enthalten. Im allgemeinen beträgt der Gew.-Anteil des in Wachs eingekapselten Katalysators 5 bis 100 %, bevorzugt 10 bis 100 %, stärker bevorzugt 20 bis 100 %, insbesondere 50 bis 100 % bezogen auf das Gesamtgewicht des eingesetzten Katalysators c).

Bei dem erfindungsgemäßen Verfahren zur Herstellung von Polyisocyanat-Polyadditionsprodukten wird ein Katalysator c) eingesetzt, wobei ein Teil oder die gesamte Menge des Katalysators c) in Wachs eingekapselt ist, d.h. neben dem erfindungsgemäßen Katalysatorsystem kann zusätzlich auch noch ein herkömmlicher, nicht in Wachs eingekapselter Katalysator verwendet werden. Bei dem Verfahren der vorliegenden Erfindung beträgt der Gew.-Anteil des in Wachs eingekapselten Katalysators 5 bis 100 %, bevorzugt 10 bis 100 %, stärker bevorzugt 20 bis 100 %, insbesondere 50 bis 100 %, bezogen auf das Gesamtgewicht der eingesetzten Komponente c).

Das erfindungsgemäße Katalysatorsystem umfasst im allgemeinen 5 bis 95 Gew.-%, bevorzugt 50 bis 90 Gew.-% Katalysator und 5 bis 95 Gew.-%, bevorzugt 10 bis 50 Gew.-% Wachs, bezogen auf das Gesamtgewicht des Katalysatorsystems.

Die verwendeten Polyisocyanate umfassen die aus dem Stand der Technik bekannten aliphatischen, cycloaliphatischen und aromatischen Isocyanate. Beispiele sind 4,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4,4'-Methylenbis-(cyclohexyl)-diisocyanat, Xylylendiisocyanat, Tetramethylxylylendiisocyanat Dodecyldiisocyanat, Lysinalkylester-diisocyanat, wobei Alkyl für C₁ bis C₁₀ steht, 2,2,4- oder 2,4,4-Trimethyl-1,6-hexamethylen-diisocyanat, 1,4-Diisocyanatocyclohexan, 1,3-oder 1,4-Bis(isocyanatomethyl)cyclohexan oder 4-Isocyanatomethyl-1,8-octamethylendiisocyanat.

Ebenfalls können Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2-Butyl-2-ethylpentamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis(cyclohexyl)diisocyanat und 4-Methylcyclohexan-1,3-diisocyanat (H-TDI) verwendet werden.

Als Polyisocyanate werden bevorzugt verwendet 4,4'-Diphenylmethandiisocyanat, 1,3- und 1,4-Phenylendiisocyanat, Toluylendiisocyanat, Isophorondiisocyanat (IPDI) und Naphtylendiisocyanat (NDI). Besonders bevorzugt wird 4,4'-MDI verwendet.

Als Polyisocyanate können auch Mischungen der vorstehend genannten Isocyanate verwendet werden.

Als Verbindungen mit mindestens zwei gegenüber Isocyanatgruppen reaktiven Wasserstoffatomen b) kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen.

Zweckmäßigerweise werden solche mit einer Funktionalität von 2 bis 8, vorzugsweise 2 bis 6, und einem Molekulargewicht von 300 bis 8000, vorzugsweise von 400 bis 4000 verwendet. Bewährt haben sich z.B. Polyether-polyamine und/oder vorzugsweise Polyole, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyether-polyole. Die Hydroxylzahl der Polyhydroxylverbindungen beträgt dabei in aller Regel 10 bis 1000 und vorzugsweise 20 bis 300.

In einer bevorzugten Ausführungsform sind Verbindungen b) mit mindestens zwei gegenüber Isocyanatgruppen reaktiven H-Atomen Polyetherpolyole. Sie werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole in Betracht, wie Ethylenglykol, Propandiol-1,2 und -1,3, Diethylenglykol, Dipropylenglykol, Butandiol-1,4, Glycerin, Trimethylolpropan usw. Die Polyetherpolyole, vorzugsweise Polyoxypropylen-polyoxyethylen-polyole, besitzen eine Funktionalität von 2 bis 3 und Molekulargewichte von 1.000 bis 8.000, vorzugsweise 2.000 bis 7.000.

Als Polyetherole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, hergestellt werden.

Weiterhin geeignet sind Polyesterpolyole. Diese können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure und aromatische Di-Säuren. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan, ferner auch Dialkohole, die aromatische oder aliphatische Ringsysteme enthalten, wie z.B. 1,4-Bisdihydroxymethylbenzol oder 1,4-Bisdihydroxyethylbenzol. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. e-Caprolacton oder Hydroxycarbonsäuren, z.B. w-Hydroxycapronsäure. Ebenfalls können Mischsysteme, die sowohl Polyesterole als auch Polyetherole enthalten, verwendet werden.

Für die Herstellung von zellförmigen Polyisocyanat-Polyadditionsprodukten ist der Einsatz von Treibmitteln notwendig. Als Treibmittel d) findet vorzugsweise Wasser Verwendung. Da die Komponenten b) und gegebenenfalls e) aufgrund der Herstellung und/oder chemischen Zusammensetzung Wasser aufweisen können, bedarf es in manchen Fällen keiner separaten Wasserzugabe zu den Komponenten b) und e) oder der Reaktionsmischung. Sofern der Polyurethan-Formulierung zur Erzielung des gewünschten Raumgewichts zusätzlich Wasser zugesetzt werden muß, wird dieses üblicherweise in Mengen von 0,05 bis 4,0 Gew.-%, vorzugsweise von 0,1 bis 3,0 Gew.-% und insbesondere von 0,3 bis 2,5 Gew.-%, bezogen auf das Gewicht der Komponenten a) und b) und gegebenenfalls e), verwendet.

Als Treibmittel d) können anstelle von Wasser oder vorzugsweise in Kombination mit Wasser auch niedrigsiedende Flüssigkeiten, die ) unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C, besitzen oder Gase eingesetzt werden. Von den als Treibmittel d) geeigneten, bezüglich NCO-Gruppen inerten Flüssigkeiten werden vorzugsweise Alkane, Cycloalkane oder Mischungen mit einem Siedepunkt von -40 bis 50°C unter Atmosphärendruck aus Alkanen und Cycloalkanen verwendet.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan und Gase, wie z.B. Stickstoff, Kohlenmonoxid und Edelgase wie z.B. Helium, Neon und Krypton.

Als Treibmittel geeignet sind ferner Salze, die sich thermisch zersetzen, wie z.B. Ammoniumbicarbonat und/oder Ammoniumcarbamat oder Verbindungen, die in situ solche Salze bilden, wie z.B. wässriger Ammoniak und/oder Amine und Kohlendioxid, und Ammoniumsalze organischer Carbonsäuren, wie z.B. die Monoammoniumsalze der Malonsäure, Borsäure, Ameisensäure oder Essigsäure. Ebenfalls können HFC-245fa^{®} (Fa. Honeywell) und HFC365mfc^{®} (Fa. Solvay) verwendet werden.

Die in der vorliegenden Erfindung gegebenenfalls verwendeten Kettenverlängerungsmittel e) können sowohl als Kettenverlängerungsmittel aber auch als Vernetzungsmittel fungieren, sie umfassen niedermolekulare, mehrwertige Alkohole, vorzugsweise Diole und/oder Triole, mit Molekulargewichten kleiner als 400 Da, bevorzugt von 60 bis 300 Da, besonders bevorzugt von 60 bis 200 Da. In Betracht kommen beispielsweise aliphatische, cycloaliphatische und/oder araliphatische Diole, wie z.B. Alkandiole mit 2 bis 14, vorzugsweise 2 bis 6 Kohlenstoffatomen und/oder Dialkylenglykole mit 4 bis 8, vorzugsweise 4 bis 6 Kohlenstoffatomen, wie z.B. Ethylenglykol, Propandiol-1,3, Decandiol-1,10, o-, m-, p-Dihydroxycyclohexan, Diethylenglykol, Triethylenglykol, Dipropylenglykol, Tripropylenglykol und vorzugsweise Butandiol-1,3, Butandiol-1,4, Hexandiol-1,6 und Bis-(2-hydroxyethyl)-hydrochinon, Pentandiol-1,5 und Pentandiol-1,3 bzw. Mischungen unterschiedlicher Diole und als mehrwertige Alkohole beispielsweise Triole, wie z.B. 1,2,4-, 1,3,5-Trihydroxycyclohexan, Trimethylolethan, Glycerin und Trimethylolpropan. Bevorzugt verwendet werden Diole und deren Mischungen.

Gegebenenfalls können bei dem erfindungsgemäßen Verfahren zur Herstellung von Polyisocyanat-Polyadditionsprodukten f) Hilfs- und Zusatzstoffe zugesetzt werden.

Als Hilfsmittel und/oder Zusatzstoffe seien beispielsweise oberflächenaktive Substanzen, Schaumstabilisatoren, Zellregler, äußere und innere Trennmittel, Füll- und Verstärkungsstoffe, wie beispielsweise Glasfasern, Farbstoffe, Pigmente, Flammschutzmittel, Hydrolyseschutzstabilisatoren, Oxidationschutzmittel, Abriebverbesserer, fungistatisch und bakteriostatisch wirkende Substanzen genannt.

Weitere Angaben über die verwendeten Ausgangsstoffe finden sich beispielsweise im Kunststoffhandbuch, Band 7, "Polyurethane", herausgegeben von Günter Oertel, Carl-Hanser-Verlag, München, 3. Auflage, 1993.

Zur Herstellung der Polyisocyanat-Polyadditionsprodukte werden die Polyisocyanate a) mit b) Verbindungen mit mindestens zwei gegenüber Isocyanat reaktiven Wasserstoffatomen und gegebenenfalls e) Kettenverlängerungsmittel in solchen Mengen zur Umsetzung gebracht, dass das Äquivalenzverhältnis von NCO-Gruppen der a) Polyisocyanate zur Summe der reaktiven Wasserstoffatome der Komponenten b) und gegebenenfalls e) 1 : 0,5 bis 1 : 3,50 (entsprechend einem Isocyanat-Index von 50 bis 350), vorzugsweise 1 : 0,65 bis 1 : 1,30 und besonders bevorzugt von 1 : 0,9 bis 1 : 1,15 beträgt.

Im allgemeinen verwendet man 0,01 bis 15 Gew.-%, bevorzugt 0,1 bis 8 Gew.-%, besonders bevorzugt 0,5 bis 4 Gew.-% Katalysator c), bezogen auf das Gewicht der Komponenten a) und b) und gegebenenfalls e).

Die Polyisocyanat-Polyadditionsprodukte werden üblicherweise nach dem bekannten one-shot oder dem ebenfalls bekannten Prepolymerverfahren hergestellt. Bei dem bevorzugten Prepolymerverfahren wird in einem ersten Schritt üblicherweise aus a) und b) ein Prepolymer hergestellt, bevorzugt ein isocyanatgruppenhaltiges Prepolymer, das anschließend mit weiterem b) zu den gewünschten Produkten umgesetzt wird.

Die Ausgangskomponenten werden üblicherweise bei einer Temperatur von 0 bis 100°C, bevorzugt 15 bis 70°C gemischt und beispielsweise in einem Formwerkzeug zur Reaktion gebracht. Die Vermischung kann beispielsweise mechanisch mittels der Niederdrucktechnik oder der Hochdrucktechnik, oder durch sonstige Vermischungsverfahren, die bei üblichen PUR-Verarbeitungsmaschinen eingesetzt werden, erfolgen.

Die nach dem erfindungsgemäßen Verfahren hergestellten Polyisocyanat-Polyadditionsprodukte können als Formkörper Verwendung finden.

Bevorzugt werden die erfindungsgemäßen Katalysatorsysteme bei PU-Systemen eingesetzt, wo Entform- und Knickzeiten eine kritische Größe darstellen oder, wo lange Fließwege gefordert sind, so dass Katalysatoren, die erst gegen Ende der Reaktion wirken, große Vorteile bieten, da eine Vernetzung, welche die Fließfähigkeit einschränken kann, erst möglichst spät eintritt. Geeignete PU-Systeme sind beispielsweise Weich-, Weichintegral-, Halbhart- und Hartschaum.

Die vorliegende Erfindung soll anhand der nachfolgenden Beispiele veranschaulicht werden.

### Beispiele

### Beispiel 1: Herstellung des Katalysatorsystems

Es wurden 150 g Alkanwachs mit Schmelzpunkt 100°C, 11 g Stearinsäure und 100 g DABCO vorgelegt. Die Vorlage wurde unter Rühren bei 120°C aufgeschmolzen. Zu der Schmelze wurden 609 g Polyetherol Lupranol^{®} 2043 dazugegeben und bei 90°C mit einem Zahnscheibenrührer (5 cm Durchmesser) bei 6000 Upm dispergiert. Nach 2 Minuten wurde unter weiterem Dispergieren das Gemisch rasch auf Raumtemperatur abgekühlt und man erhielt eine Dispersion von kristallisierten Wachsteilchen (Schmelzpunkt ca. 80°C) mit einer mittleren Teilchengröße von etwa 20 µm in dem Polyetherol.

Beispiele 2 bis 4 und Vergleichsbeispiele 5 und 6:
Herstellung von PU-Schäumen:

Die in Tabelle 1 aufgeführten Polyolkomponenten (alle Angaben sind Gewichtsteile) wurden mit einer Isocyanat-Komponente mit folgender Zusammensetzung zu Schäumen umgesetzt, dabei ergaben sich die in Tabelle 2 dargestellten Reaktionsdaten:

### Prepolymer auf Basis

54 Gew.-Teile 4,4'-MDI
44 Gew.-Teile eines Polyols mit der OH-Zahl von 28 und mittleren Funktionalität von zwei, aufgebaut aus ca. 80 % Propylenoxid mit einem 20%igen Ethylenoxid-Endcap
2 Gew.-Teile Dipropylenglykol
NCO-Gehalt: 14 %

**Tabelle 1**

| Bestandteile Polyolkomponente | Bsp. 2 | Bsp. 3 | Bsp. 4 | Vergleichs-Bsp. 5 | Vergleichs-Bsp. 6 |
|---|---|---|---|---|---|
| Polyether mit OHZ 28 und mittlerer Funktionalität 2, 80 % PO und 20 % EO-Endcap | 45 | 45 | 45 | 45 | 45 |
| Polyether mit OHZ 26 und mittlerer Funktionalität 3,78 % PO und 22 % EO-Endcap | 36 | 35,60 | 35,30 | 37 | 37 |
| Butandiol-1,4 | 14,15 | 14,15 | 14,15 | 14,15 | 14,15 |
| Wasser | 0,80 | 0,80 | 0,80 | 0,8 | 0,80 |
| Stabilisator DC 193^{®} (Air-Products) | 0,50 | 0,50 | 0,50 | 0,5 | 0,50 |
| Katalysatorsystem von Beispiel 1 | 1,30 | 2,00 | 4,00 | 0 | 0 |
| Katalysator Lupragen^{®} N202 | 2,50 | 2,50 | 2,50 | 2,5 | 4,90 |
| Katalysator Lupragen^{®} N206 | 0,40 | 0,40 | 0,40 | 0,4 | 0,40 |
| Katalysator OTS 17D^{®} (AKCROS) | 0,05 | 0,05 | 0,05 | 0,05 | 0,05 |
| Mischungsverhältnis A: B (bezogen auf Gewichtsteile) | 1: 1,40 1 : 1,40 | 1 : 1,41 1 : 1,41 | 1 : 1,41 1 : 1,41 | 1 : 1,39 1 : 1,39 | 1 : 1,41 1 : 1,41 |

Bei der Versuchsdurchführung ergaben sich folgende Werte:

**Tabelle 2**

| Vorgang | Bsp.2 | Bsp. 3 | Bsp.4 | Vergleichs-Bsp. 5 | Vergleichs-Bsp. 6 |
|---|---|---|---|---|---|
| Mischzeit [sec] | 9 | 9 | 9 | 9 | 5 |
| Startzeit [sec] | 14 | 14 | 14 | 14 | 8 |
| Steigzeit [sec] | 53 | 48 | 42 | 71 | 40 |
| Gelzeit [sec] | 36 | 34 | 30 | 39 | 27 |
| Entformzeit [sec] | 120 | 120 | 120 | 120 | 120 |
| Knickzeit [sec] | 210 | 185 | 170 | 240 | 165 |
| Wasseranteil | 0,1855 | 0,1855 | 0,1856 | 0,1856 | 0,1854 |
| Plattendichte [g/l] | 565 | 552 | 560 | 543 | 549 |

Bei den Beispielen 2 bis 4 und den Vergleichsbeispielen 5 und 6 werden die Komponenten mit einem Rührgerät vermischt. Die Start-, Steig und Gelzeiten wurden einem Fomatsteighöhenmessgerät bzw. Ultraschallsteighöhenmessgerät bestimmt. Die Entformzeit gibt die Zeit an, nach der eine geschäumte Platte aus der Form entnommen wird. Die Knickzeit gibt die Zeit an, nachdem die entformte geschäumte Platte um 180 ° geknickt werden kann, ohne Risse zu erhalten.

Im Vergleichsbeispiel 5 wurde kein erfindungsgemäßes Katalysatorsystem verwendet, ebenso im Vergleichsbeispiel 6, hier wurde jedoch die doppelte Menge des herkömmlichen Katalysators Lupragen^{®} N202 eingesetzt.

Die vorliegenden Beispiele zeigen eindeutig, dass nur durch Verwendung des erfindungsgemäßen Katalysatorsystems (Beispiel 2 bis 4) sowohl kurze Knickzeiten als auch hohe Startzeiten erzielt werden können. Vergleichsbeispiele 5 und 6 weisen eine hohe Knickzeit bzw. eine kurze Startzeit auf.

## Patentansprüche

1. Verfahren zur Herstellung von Katalysatorsystemen enthaltend mindestens einen Katalysator c), der eine Reaktion von Polyisocyanaten a) mit Verbindungen b) mit mindestens zwei gegenüber Isocyanatgruppen reaktiven Wasserstoffatomen katalysiert und in Wachs eingekapselt ist, **dadurch gekennzeichnet, dass** man die Katalysatoren c) in geschmolzenem Wachs aufnimmt und anschließend in einer polaren Flüssigkeit dispergiert.

2. Verfahren nach Anspruch 1, **dadurch gekennzeichnet, dass** die polare Lösung Wasser und/oder Verbindungen b) mit mindestens zwei gegenüber Isocyanatgruppen reaktiven Wasserstoffatomen enthält.

3. Verfahren zur Herstellung von Katalysatorsystemen enthaltend mindestens einen Katalysator c), der eine Reaktion von Polyisocyanaten a) mit Verbindungen b) mit mindestens zwei gegenüber Isocyariatgruppen reaktiven Wasserstoffatomen katalysiert und in Wachs eingekapselt ist, **dadurch gekennzeichnet, dass** man die Katalysatoren c) in geschmolzenem Wachs aufnimmt und anschließend durch Versprühen in einem Gasstrom oder durch Gefriertrocknung in partikuläre Form bringt.

## Claims

1. A process for the preparation of catalyst systems comprising at least one catalyst c) which catalyzes a reaction of polyisocyanates a) with compounds b) having at least two hydrogen atoms reactive towards isocyanate groups and is encapsulated in wax, wherein the catalysts c) are taken up in molten wax and then dispersed in a polar liquid.

2. The process according to claim 1, wherein the polar solution comprises water and/or compounds b) having at least two hydrogen atoms reactive towards isocyanate groups.

3. A process for the preparation of catalyst systems comprising at least one catalyst c) which catalyzes a reaction of polyisocyanates a) with compounds b) having at least two hydrogen atoms reactive towards isocyanate groups and is encapsulated in wax, wherein the catalysts c) are taken up in molten wax and then brought into particulate form by spraying in a gas stream or by freeze-drying.

## Revendications

1. Procédé de préparation de systèmes catalyseurs contenant au moins un catalyseur c), qui catalyse la réaction de polyisocyanates a) avec des composés b) ayant au moins deux atomes d'hydrogène réagissant avec les groupes isocyanate et qui est encapsulé dans une cire, **caractérisé en ce que** l'on fixe les catalyseurs c) dans la cire fondue et, ensuite, on disperse dans un liquide polaire.

2. Procédé selon la revendication 1, **caractérisé en ce que** le solvant polaire contient de l'eau et/ou des composés b) ayant au moins deux atomes d'hydrogène réagissant avec les groupes isocyanate.

3. Procédé de préparation de systèmes catalyseurs contenant au moins un catalyseur c), qui catalyse la réaction de polyisocyanates a) avec des composés b) ayant au moins deux atomes d'hydrogène réagissant avec les groupes isocyanate et qui est encapsulé dans une cire, **caractérisé en ce que** l'on fixe les catalyseurs c) dans la cire fondue et, ensuite, on convertit en une forme particulaire par pulvérisation dans un courant gazeux ou par lyophilisation.
